# FASCICULE DE BREVET EUROPEEN

(11) **EP 2 581 293 B1**
(45) Date de publication et mention de la délivrance du brevet: **14.05.2014**
(21) Numéro de dépôt: 12187211.3
(22) Date de dépôt: 04.10.2012
(51) Int. Cl.: B62D 24/02, F41H 7/02

(54) **Dispositif de renforcement de liaison**
Verbindungsverstärkungsvorrichtung
Connection reinforcement device

(30) Priorité: 14.10.2011 FR 1103162
(43) Date de publication de la demande: 17.04.2013
(73) Titulaire: NEXTER Systems, 42328 Roanne (FR)
(72) Inventeur: Germenot, Olivier, 18023 BOURGES CEDEX (FR); Timmer, Bernard, 18023 BOURGES CEDEX (FR); Besancon, Jérôme, 18023 BOURGES CEDEX (FR)
(74) Mandataire: Chaillot, Geneviève

(56) Documents cités:
- FR-A1- 2 916 528
- JP-A- 2004 330 808

## Description

Le domaine technique de l'invention est celui des dispositifs de renforcement d'une liaison entre une cellule et une structure porteuse d'un véhicule pouvant être soumis à un choc de mine.

Le document FR 2 916 528 décrit un dispositif selon le préambule de la revendication 1.

Lorsqu'un véhicule comportant une cabine montée sur un châssis par l'intermédiaire de supports antivibratoires type "silent block" ou plus généralement, lorsqu'une cellule de véhicule montée sur une structure porteuse est soumise à un tir de mine par le dessous du véhicule, la cellule peut être amenée à se décrocher de la structure porteuse et à être projetée.

Quand bien même la cellule serait protégée contre la perforation, sa projection constituerait un autre danger non négligeable pour les occupants.

Pour limiter le débattement entre deux éléments mobiles relativement l'un par rapport à l'autre, il est connu dans le brevet FR2867537 de recourir à un support antivibratoire en élastomère reliant les deux éléments mobiles susceptibles de se rapprocher ou de s'écarter l'un de l'autre. Une ceinture inextensible entoure le support en élastomère ainsi que les deux éléments mobiles limitant ainsi l'écartement possible entre les éléments mobiles.

Ce dispositif est conçu pour réduire les vibrations d'un pot d'échappement par rapport à une caisse de véhicule. Il est adapté à des mouvements de faible amplitude (quelques millimètres) et de fréquence élevée (de l'ordre du MHz).

Il n'est en aucun cas adapté pour absorber l'énergie brutalement et massivement dissipée par l'explosion d'une mine ou autre engin explosif qui produit des déplacements rapides et de forte amplitude (de l'ordre de plusieurs dizaines de centimètres).

Par ailleurs il est nécessaire pour assurer le confort de roulage de conserver une liaison entre châssis et cabine utilisant des supports antivibratoires souples.

L'invention se propose de résoudre le problème de la désolidarisation entre la cellule et la structure porteuse d'un véhicule lorsqu'il est soumis à un choc de mine sans pour autant nuire au confort de roulage du véhicule.
Pour cela l'invention propose des moyens permettant de renforcer la liaison souple reliant la cellule et la structure porteuse sans pour autant nuire au fonctionnement normal de cette structure souple.

Ainsi pour résoudre ce problème, l'invention à pour objet un dispositif de renforcement d'une liaison entre une structure porteuse et une cellule d'un véhicule, liaison ayant un débattement maximal donné, dispositif de renforcement **caractérisé en ce qu'il** comporte au moins deux liens entourant au moins un élément de la structure porteuse avec un jeu supérieur au débattement maximal de la liaison, chaque lien étant rendu par ailleurs solidaire de la cellule par au moins un moyen de fixation, chaque lien étant calibré à la rupture et étant de longueur différente de façon à présenter un jeu différent avec l'élément de la structure.
Selon une caractéristique de l'invention, chaque lien comporte une première et une seconde extrémité, toutes les premières extrémités des liens étant solidaires d'un même premier moyen de fixation et toutes les secondes extrémités des liens étant solidaires d'un même second moyen de fixation.
Selon un premier mode de réalisation, un moyen de fixation pourra comporter un logement correspondant avec un bourrelet obtenu par enroulement et couture d'une extrémité des liens pour obtenir une liaison encastrement.

Selon un second mode de réalisation de l'invention, un moyen de fixation pourra comporter un jeu de cales et de plaques liées par un moyen de serrage et assurant la solidarisation d'une extrémité des liens par pincement.
Avantageusement, les liens pourront être pliés entre les cales et plaques assurant leur pincement et seront guidés par un perçage d'un support solidaire de la cellule et disposé entre cales et plaques, une traction sur un lien provoquant un glissement de ce lien au travers du perçage et un déchirement progressif du lien.
Selon différentes variantes, au moins un lien pourra être formé par une sangle textile.
Au moins un lien pourra être formé par un câble métallique.

L'invention sera mieux comprise à la lecture de la description suivante, description faite en référence aux dessins annexés dans lesquels:
La figure 1 représente une vue en coupe longitudinale de la partie avant d'un véhicule comportant un dispositif de renforcement selon l'invention.
La figure 2 représente une vue de détail de trois quarts d'une partie d'un véhicule comportant un mode de réalisation d'un dispositif de renforcement selon l'invention.
La figure 3 représente une vue de détail d'un autre mode de réalisation d'un moyen de fixation.
La figure 4 représente une vue en coupe longitudinale de la partie avant d'un véhicule soumis à un choc de mine et comportant un dispositif de renforcement selon l'invention.

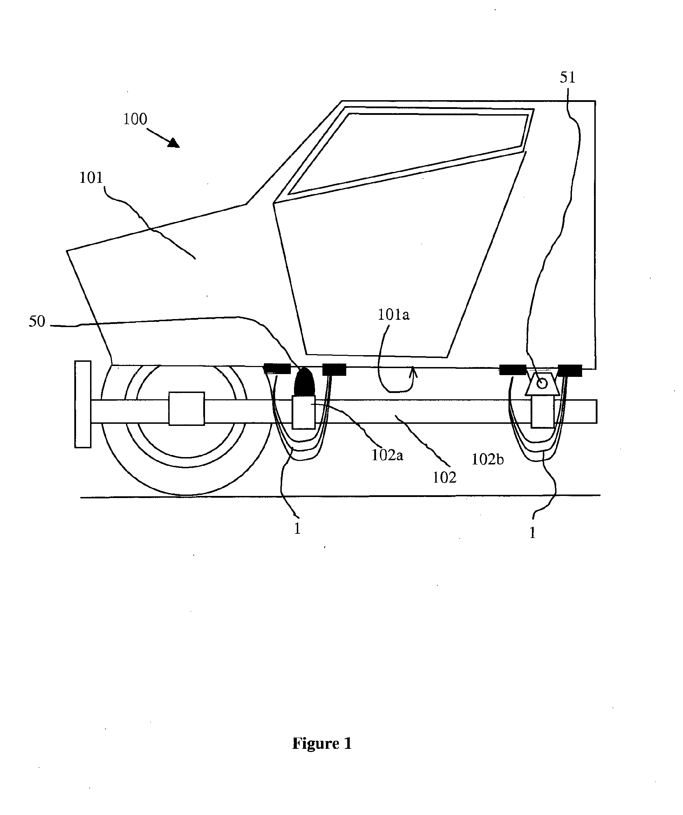

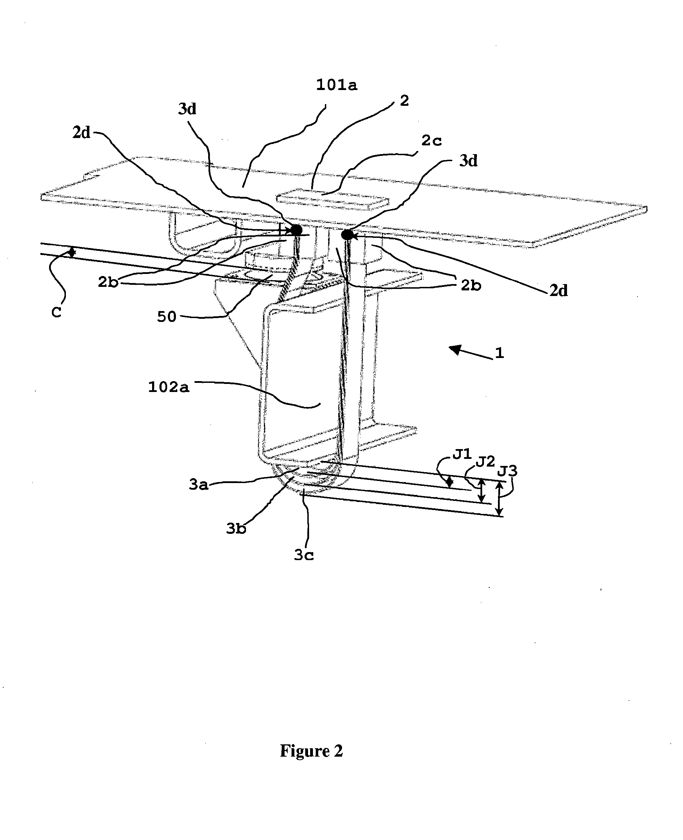

Selon la figure 1 et selon un mode de réalisation, un véhicule 100 comporte une cellule 101 solidaire d'une structure porteuse 102 au voisinage de longerons 102a et 102b de la structure porteuse 102. Les liaisons de la cellule 101 avec la structure porteuse 102 est faite au moyen d'éléments amortisseurs 50 de type "silent block" dans la partie avant, et d'une liaison pivot 51 dans la partie arrière. La cellule 101, au voisinage de chacun des longerons 102a et 102b, est solidaire de dispositifs de renforcement de liaison 1 contre les chocs de mines.
Selon la figure 2, le plancher 101a de la cellule du véhicule (cellule et véhicule visibles à la figure 1) est solidaire du longeron 102a qui est un élément de la structure porteuse du véhicule. La solidarisation est faite au moyen de l'élément amortisseur de vibrations 50, élément disposant d'une course verticale maximale C, les autres degrés de liberté étant inferieurs ou égaux à cette course.
Un dispositif de renforcement de liaison 1 contre les chocs de mines est rendu solidaire du plancher 101a par un moyen de fixation 2. Ce moyen de fixation 2 comporte une platine 2c solidaire du plancher 101a du véhicule par soudage par exemple. Deux paires de plaques support 2b solidaire de la platine 2c traversent le plancher 101a.
Le dispositif de renforcement de liaison 1 comporte au moins deux liens 3 souples (au nombre de trois selon le mode réalisation décrit). Chacun des liens 3a,3b,3c est solidaire par chacune de ses extrémités du moyen de fixation 2 au niveau d'une des paires de plaques support 2b. Chaque lien 3a,3b,3c a une longueur différente. Les liens 3a,3b,3c entourent le longeron 102a et sont disposés de telle manière qu'un lien, le plus court 3a des trois, entoure le longeron 102a avec un jeu J1 supérieur au débattement maximal admissible par la liaison formée par l'élément amortisseur 50. Ainsi le lien 3a ne gêne pas le fonctionnement normal du moyen amortisseur 50 lors du roulage du véhicule.
Ce lien le plus court 3a est entouré par un lien de longueur supérieur 3b, qui est lui-même entouré d'un lien plus long 3c. Le lien le plus long 3c entoure les deux autres liens 3a et 3b. Selon le mode de réalisation décrit, les extrémités des liens 3a,3b,3c sont enroulées sur elles-mêmes et cousues ensembles pour former un bourrelet 3d qui est encastré avec le moyen de fixation 2. L'encastrement se faisant par exemple par insertion du bourrelet 3d dans un logement correspondant 2d aménagé entre deux des plaques supports 2b.
On notera que la partie basse du lien le plus court 3a est séparée de la partie basse du longeron 102a de la structure porteuse 102 par un premier jeu fonctionnel J1. Ce Jeu J1 est supérieur à la course maximale C admissible par l'élément amortisseur de vibrations 50.
On notera que le fait que les liens sont souples et disposés à distance de la structure porteuse autorise des déplacements omnidirectionnels de la cellule par rapport à la structure porteuse.
Un second jeu vertical J2 sépare le lien de longueur intermédiaire 3b de la partie basse du longeron 102a. Un troisième jeu vertical J3 sépare le troisième lien 3c , lien le plus long, de la partie basse du longeron 102a. On rappelle que le longeron 102a appartient à la structure porteuse 102.

Selon le mode de réalisation décrit, les liens sont réalisés sous la forme de sangles textiles comportant par exemple des fibres aramides connues sous le nom de Kevlar qui est une marque déposé. Chacun des liens est calibré à la rupture en traction afin d'obtenir une rupture à un niveau d'énergie maîtrisé. Le calibrage à la rupture pourra se faire en choisissant une section du matériau de chaque moyen de liaison adaptée au niveau de contraintes à partir duquel on souhaite voir rompre le lien. L'endroit privilégié pour la rupture de chaque lien pourra être choisi en pratiquant une amorce de rupture à cet endroit. Afin d'absorber progressivement l'énergie du choc de mine, la résistance à la traction de chacun des liens pourra être choisie de manière à augmenter progressivement, du lien le plus court au lien le plus long.
La distance séparant chaque lien du ou des liens voisins pourra être différente.

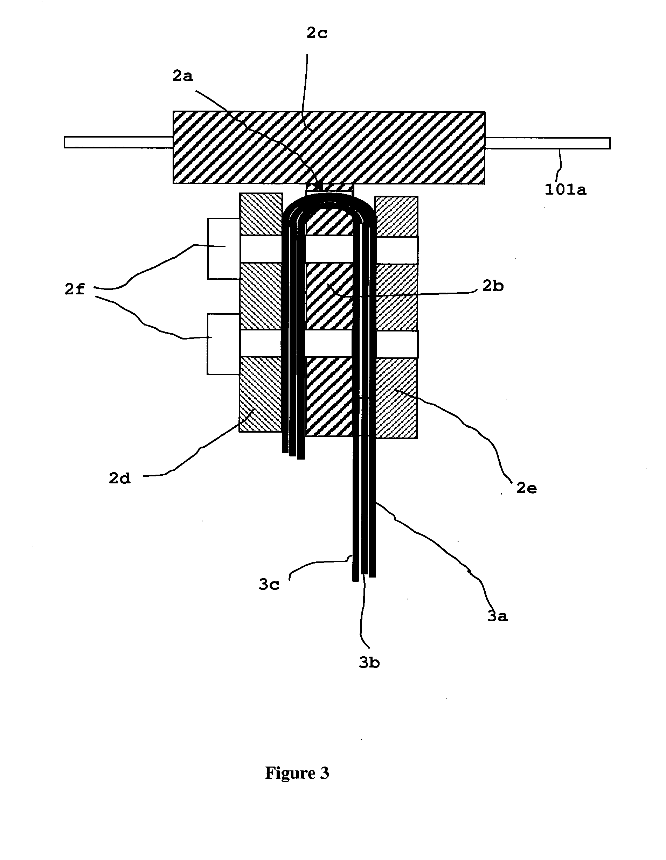

La figure 3 montre un autre mode de réalisation du moyen de fixation 2 (solidaire du plancher 101 de la cellule du véhicule). Ce moyen comporte une plaque support 2b sensiblement verticale. Cette plaque support 2b comporte un perçage 2a dans lequel sont passés les trois liens 3a,3b,3c. Les liens sont repliés de part et d'autre de la plaque 2b. Les liens sont pincés de part et d'autre de la plaque 2b par des cales 2d et 2e.
L'effort de pincement exercé par les cales 2d et 2e est fourni par le serrage de deux vis 2f qui traversent l'ensemble formé par : les cales 2d et 2e, les liens 3a,3b,3c et la plaque 2b. Le serrage des vis est effectué avec un couple maitrisé. Ainsi lors d'un choc de mines, la traction exercée sur les liens 3a,3b,3c amènera ceux ci à glisser entre les cales et à se déchirer progressivement en absorbant une partie de l'énergie du choc.

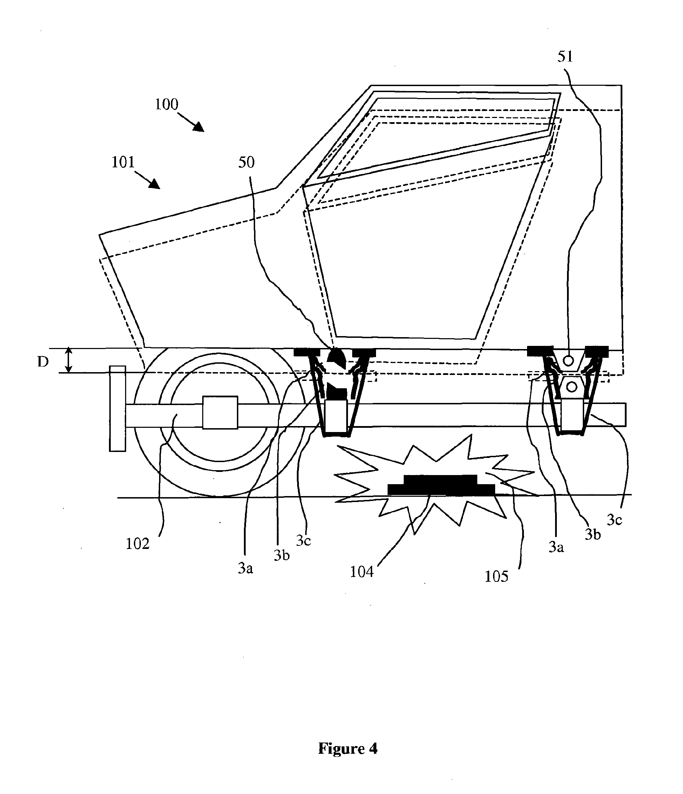

On a représenté à la figure 4 le fonctionnement du dispositif selon l'invention.
Une mine 104 éclate sous le véhicule 100 en produisant un souffle 105 qui provoque le soulèvement de la cellule 101 du véhicule 100. L'énergie brutalement et massivement libérée provoque la rupture des liaisons 50 et 51 entre la cellule 101 et la structure porteuse 102.
Le déplacement vertical de la cellule 101 par rapport à la structure porteuse 102 conduit dans un premier temps à la mise en tension du lien le plus court 3a qui se rompt en absorbant une partie de l'énergie du souffle.
Dans un second temps, le lien de longueur intermédiaire 3b vient à son tour en contact avec la structure porteuse 102, il se tend et se rompt à son tour en absorbant lui aussi une partie de l'énergie restante.
Le dernier lien 3c (lien le plus long) vient enfin en contact avec la structure porteuse 102. Il est mis en tension et absorbe lui aussi de l'énergie par allongement et évite la projection de la cellule 101 au loin de la structure porteuse 102. Ce dernier lien est dimensionné pour ne pas se rompre assurant le maintien d'une solidarisation entre structure porteuse 102 et cabine 101.
La liaison entre la cellule 101 et la structure porteuse 102 est ainsi renforcée. Le distance totale D entre cellule 101 et structure porteuse 102 représente ainsi le cumul des jeux J1, J2, J3 et de l'allongement final du lien le plus long 3b, auxquels s'ajoute le cas échant la distance de glissement au niveau du moyen de fixation 2 si l'on emploie le mode de réalisation décrit à la figure 3.
Selon une variante, les liens pourront être réalisés sous la forme de câbles d'acier. Un panachage entre câbles d'acier et sangles textiles est également envisageable afin de mieux adapter les allongements et les capacités de résistance à la rupture en fonction de chaque lien.

## Revendications

1. Dispositif de renforcement (1) d'une liaison entre une structure porteuse (102) et une cellule (101) d'un véhicule (100), liaison ayant un débattement maximal donné, dispositif de renforcement **caractérisé en ce qu'il** comporte au moins deux liens (3a, 3b, 3c) entourant au moins un élément de la structure porteuse (102) avec un jeu (J1,J2,J3) supérieur au débattement maximal (C) de la liaison, chaque lien (3a, 3b,3c) étant rendu par ailleurs solidaire de la cellule (101) par au moins un moyen de fixation (2), chaque lien (3a, 3b, 3c) étant calibré à la rupture et étant de longueur différente de façon à présenter un jeu (J1,J2,J3) différent avec l'élément de la structure (102).

2. Dispositif de renforcement (1) de liaison selon la revendication 1, **caractérisé en ce que** chaque lien (3a, 3b,3c) comporte une première et une seconde extrémité, toutes les premières extrémités des liens étant solidaires d'un même premier moyen de fixation (2) et toutes les secondes extrémités des liens étant solidaires d'un même second moyen de fixation (2).

3. Dispositif de renforcement (1) de liaison selon la revendication 2, **caractérisé en ce qu'**au moins un moyen de fixation (2) comporte un logement (2d) correspondant avec un bourrelet (3d) obtenu par enroulement et couture d'une extrémité des liens (3a, 3b, 3c) pour obtenir une liaison encastrement.

4. Dispositif de renforcement de liaison selon la revendication 2, **caractérisé en ce qu'**au moins un moyen de fixation (2) comporte un jeu de cales (2d, 2e) et de plaques liées (2b) par un moyen de serrage (2f) et assurant la solidarisation d'une extrémité des liens par pincement.

5. Dispositif de renforcement de liaison selon la revendication 4, **caractérisé en ce que** les liens (3a, 3b 3c) sont pliés entre les cales (2d,2e) et plaques (2f) assurant leur pincement et sont guidés par un perçage (2a) d'un support (2c) solidaire de la cellule (101) et disposé entre cales (2d,2e) et plaques (2f), une traction sur un lien (3a) provoquant un glissement de ce lien (3a) au travers du perçage (2a) et un déchirement progressif du lien (3a).

6. Dispositif de renforcement (1) de liaison selon une des revendications 1 à 5, **caractérisé en ce qu'**au moins un lien (3a, 3b, 3c) est formé par une sangle textile.

7. Dispositif de renforcement (1) de liaison selon une des revendications 1 à 6, **caractérisé en ce qu'**au moins un lien (3a, 3b, 3c) est formé par un câble métallique.

## Patentansprüche

1. Verstärkungsvorrichtung (1) für eine Verbindung zwischen einer Trägerkonstruktion (102) und einer Zelle (101) eines Fahrzeugs (100), wobei die Verbindung einen bestimmten maximalen Federweg aufweist, wobei die Verstärkungsvorrichtung **dadurch gekennzeichnet ist, dass** sie mindestens zwei Verbindungsglieder (3a, 3b, 3c) aufweist, die mindestens ein Element der Trägerkonstruktion (102) mit einem Zwischenraum (J1, J2, J3) umgeben, das größer ist als der maximale Federweg (C) der Verbindung, wobei jedes Verbindungsglied (3a, 3b, 3c) darüber hinaus mit der Zelle (101) über mindestens ein Befestigungsmittel (2) fest verbunden ist, wobei jedes Verbindungsglied (3a, 3b, 3c) genau eingestellt ist, dass es reißt, und unterschiedlich lang ist, sodass es einen unterschiedlichen Zwischenraum (J1, J2, J3) zu dem Element der Konstruktion (102) aufweist.

2. Verstärkungsvorrichtung (1) für eine Verbindung nach Anspruch 1, **dadurch gekennzeichnet, dass** jedes Verbindungsglied (3a, 3b, 3c) ein erstes und ein zweites Ende aufweist, wobei alle ersten Enden der Verbindungsglieder mit ein und demselben ersten Befestigungsmittel (2) fest verbunden sind und alle zweiten Ende der Verbindungsglieder mit ein und demselben zweiten Befestigungsmittel (2) fest verbunden sind.

3. Verstärkungsvorrichtung (1) für eine Verbindung nach Anspruch 2, **dadurch gekennzeichnet, dass** mindestens ein Befestigungsmittel (2) eine Aufnahme (2d) aufweist, die mit einer Wulst (3d) in Verbindung steht, die durch Zusammenrollen und -nähen eines Endes der Verbindungsglieder (3a, 3b, 3c) erhalten wird, um eine Einsteckverbindung zu erhalten.

4. Verstärkungsvorrichtung für eine Verbindung nach Anspruch 2, **dadurch gekennzeichnet, dass** mindestens ein Befestigungsmittel (2) einen Satz aus Klemmelementen (2d, 2e) und Platten (2b) aufweist, die durch ein Spannmittel (2f) verbunden sind und für die feste Verbindung eines Endes der Verbindungsglieder mittels Quetschen sorgen.

5. Verstärkungsvorrichtung für eine Verbindung nach Anspruch 4, **dadurch gekennzeichnet, dass** die Verbindungsglieder (3a, 3b 3c) zwischen den Klemmelementen (2d, 2e) und Platten (2f), die dafür sorgen, dass sie gequetscht werden, gebogen sind und von einer zwischen den Klemmelementen (2d, 2e) und Platten (2f) angeordneten Bohrung (2a) eines fest mit der Zelle (101) verbunden Trägers (2c) geführt sind, wobei das Ziehen an einem Verbindungsglied (3a) eine Rutschbewegung dieses Verbindungsglieds (3a) durch die Bohrung (2a) und ein allmähliches Zerreißen des Verbindungsglieds (3a) bewirkt.

6. Verstärkungsvorrichtung (1) für eine Verbindung nach einem der Ansprüche 1 bis 5, **dadurch gekennzeichnet, dass** zumindest ein Verbindungsglied (3a, 3b, 3c) von einem textilen Band gebildet ist.

7. Verstärkungsvorrichtung (1) für eine Verbindung nach einem der Ansprüche 1 bis 6, **dadurch gekennzeichnet, dass** zumindest ein Verbindungsglied (3a, 3b, 3c) von einem Drahtseil gebildet ist.

## Claims

1. Device (1) for reinforcing a connection between a load-bearing structure (102) and a cell (101) of a vehicle (100), wherein the connection has a given maximum displacement, the reinforcement device being **characterized in that** it comprises at least two links (3a, 3b, 3c) surrounding at least one element of the load-bearing structure (102) with a clearance (J1, J2, J3) greater than the maximum displacement (C) of the connection, each link (3a, 3b, 3c) being further made integral with the cell (101) by at least one fixing means (2), each link (3a, 3b, 3c) being calibrated to the rupture and of a different length so as to exhibit a different clearance (J1, J2, J3) with the element of the structure (102).

2. Connection reinforcement device (1) according to claim 1, **characterized in that** each link (3a, 3b, 3c) comprises a first and a second end, all of the first ends of the links being integral with a same first fixing means (2) and all of the second ends of the links being integral with a same second fixing means (2).

3. Connection reinforcement device (1) according to claim 2, **characterized in that** at least one fixing means (2) comprises a housing (2d) corresponding to a bead (3d) obtained by rolling and sewing one end of the links (3a, 3b, 3c) to obtain a fixed joint.

4. Connection reinforcement device according to claim 2, **characterized in that** at least one fixing means (2) comprises a set of chocks (2d, 2e) and of plates (2b) connected by a clamping means (2f) and ensuring the securing of one end of the links by pinching.

5. Connection reinforcement device according to claim 4, **characterized in that** the links (3a, 3b, 3c) are bended between the chocks (2d, 2e) and the plates (2f) ensuring the pinching thereof and are guided by a drilling (2a) of a support (2c) integral with the cell (101) and arranged between the chocks (2d, 2e) and the plates (2f), a pulling action on a link (3a) causing this link (3a) to slide through the drilling (2a) and to gradually tears.

6. Connection reinforcement device (1) according to one of claims 1 to 5, **characterized in that** at least one link (3a, 3b, 3c) is formed by a textile strap.

7. Connection reinforcement device (1) according to one of claims 1 to 6, **characterized in that** at least one link (3a, 3b, 3c) is formed by a wire rope.
